Europäisches Patentamt

European Patent Office

Office européen des brevets

(19)

(11) Publication number: 0 172 669
A1

## (12) EUROPEAN PATENT APPLICATION

(21) Application number: 85305273.6

(22) Date of filing: 24.07.85

(51) Int. Cl.4: G01F 1/68

(30) Priority: 25.07.84 US 634088
30.07.84 US 635877

(43) Date of publication of application:
26.02.86 Bulletin 86/09

(84) Designated Contracting States:
DE GB NL SE

(71) Applicant: HONEYWELL INC.
Honeywell Plaza
Minneapolis Minnesota 55408(US)

(72) Inventor: Bohrer, Philip J.
2604 West 55th street
Minneapolis Minnesota 55410(US)
Inventor: Higashi, Robert E.
Apartment 212, 10000 Nicollet Avenue South
Bloomington Minnesota 55420(US)
Inventor: Johnson, Robert G.
12814 March Circle
Minnetonka Minnesota 55343(US)
Inventor: Satren, Ernest
1207 East 92nd Street
Bloomington Minnesota 55420(US)
Inventor: Brose, Ernest F.
325 East Jefferson
Freeport Illinois 61032(US)

(74) Representative: Harman, Michael Godfrey et al
Honeywell Control Systems Ltd. Patent Department
Charles Square
Bracknell Berkshire RG12 1EB(GB)

(54) Flow sensor assembly.

(57) A flow sensor assembly utilizes a flow sensor 12, 20 comprising a silicon chip bearing a heating resistor with two temperature sensing resistors on the upstream and downstream sides, the resistors being formed as thin films extending over an etched pit in the chip. The assembly comprises the chip and a support means on which the chip is integrally mounted, the support means being formed to provide a flow channel 19A in which the flow profile is fully developed, independent of the flow profile at the entry to the channel, by the time the fluid reaches the chip. The chip may be flip-chip mounted over the channel. Operating circuitry 13 is also preferably integral with the support means. The support means may be a printed circuit board, a ceramic substrate, or a semiconductor substrate.

Fig. 3

## FLOW SENSOR ASSEMBLY

Many applications of miniature flow sensors require that the flow of air or gas be directed across the sensor in a well-controlled manner. Miniature flow sensors can also be applied in practice to measuring pressure difference if they are properly packaged in an appropriate housing.

For practical pressure difference application, the rate of flow through the sensor housing should be regulated to low levels to allow effective use of reasonable filters. Effective filtering is required to remove particulates from the gas to prevent particulate accumulation on the sensor. A lower rate of flow through the housing results in a lower amount of airborne particulates entering the housing and results in less loading of the filter and longer maintenance-free use. Also, high flow impedance facilitates a broader base of practical pressure difference applications as the lower flow rates are more tolerable.

We have realized that a practical sensor housing for miniature flow sensors should be configured so that the gas flow rate or velocity profile at the active sensing area of the miniature sensor is stable and independent of the flow velocity profile outside the housing. That is, the flow profile at the sensor should be substantially fully developed and substantially independent of the flow profile upstream of the housing inlet, i.e. substantially fully stabilized.

Miniature flow sensors also require circuitry and electrical connections to circuitry to drive, read-out, signal condition the sensor response, or otherwise operate the sensor.

Accordingly the present invention provides a flow sensor assembly comprising a flow sensor having a sensing element and support means for supporting the flow sensor, characterized in that the support means has formed therein a flow channel with the sensor mounted adjacent thereto integrally with the support means, the configuration of the flow channel being such as to provide at the sensing element a stabilized flow profile.

Various embodiments of the invention will now be described, by way of example, with reference to the drawings, in which:

Figure 1 is a general view of the flow sensor assembly;

Figures 2 and 2A are transverse sections of two methods of mounting the flow sensor in the assembly;

Figures 3 and 3A show transverse and longitudinal sections of a third method of mounting the flow sensor in the assembly (on a larger scale than Figures 2 and 2A); and

Figures 4 and 5 show transverse and longitudinal sections (on a still larger scale) of a preferred form of sensor.

The present arrangement provides an integral flow sensor and channel assembly without the need for secondary packaging to carry the sensor or circuitry. Prior housings involved bonding a miniature sensor to a first-level package and electrically connecting the first-level package to a second-level package which supports the associated electronic circuitry. The present arrangement eliminates the need for the first-level package and, at the same time, provides means for meeting the flow control requirements mentioned above.

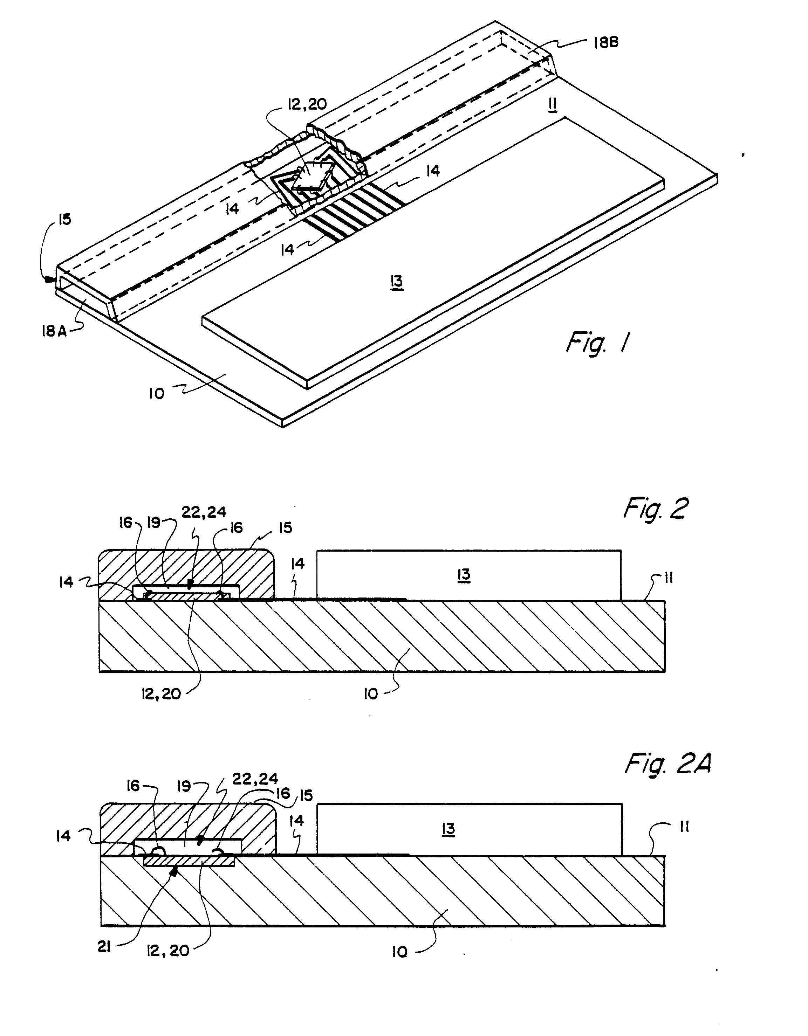

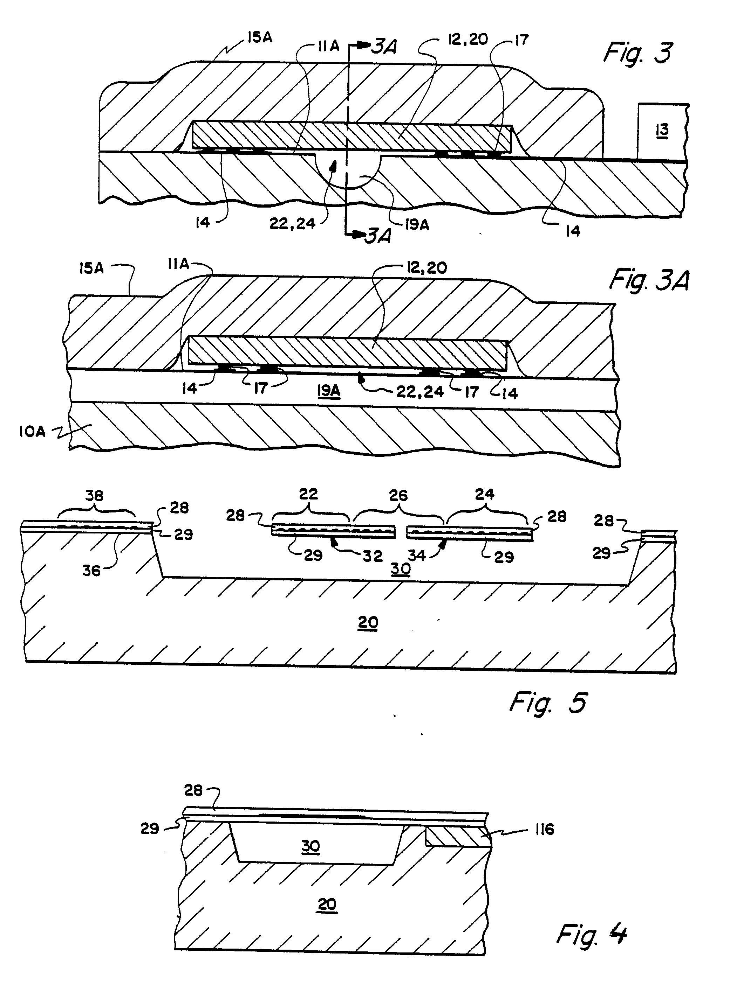

Figure 1 shows a flow sensor 12 having sensing elements 22 and 24 (see Figure 5) and support means 10 for supporting the flow sensor. A flow channel 19 is formed at least in part by support means 10. Flow channel 19 has an inlet 18A and an outlet 18B for providing flow across sensing elements 22 and 24, which are located in the enclosed flow channel between inlet 18A and outlet 18B. Circuitry 13 for operating the sensor, flow sensor 12, enclosed flow channel 19, and electrical connections 14 between the sensor and circuit are all integral to the support means 10.

Flow channel 19 is configured to provide at sensing elements 22 and 24 a substantially fully developed flow profile which is substantially independent of the flow profile entering inlet 18A. A miniature flow sensor such as disclosed can respond only to the flow rate at the immediate vicinity of its active sensing area. A change in the flow profile at the sensor will cause a change in sensor response even if the rate of flow through the channel is the same. That is, a sensor can respond to both changes in flow rate and to changes in flow profile, and miniature sensors are particularly sensitive to changes in both flow rate and flow profile. Therefore, in order to realize reliable flow rate and pressure difference measurements, the flow profile in the channel at the sensor should be controlled in order to avoid erroneous sensor response.

Flow profile stability can be realized by making the enclosed flow channel between inlet 18A and sensor 12 sufficiently long and continuous such that the flow is substantially fully developed at the sensor region of the channel.

The embodiments illustrated in Figures 1, 2 and 2A utilize a relatively shallow flow channel 19 which provides a substantially fully developed flow profile at the sensor without requiring impractical channel lengths. A flow channel having a length of 25 mm between inlet 18A and sensor 12, a height of 0.5 mm, and a width of 2.5 mm is exemplary.

The embodiment illustrated in Figures 1 and 2 illustrates flow sensor 12 integral to a semiconductor body 20 with semiconductor body 20 bonded to the upper surface 11 of support piece 10. In this embodiment, therefore, sensing elements 22 and 24 are not in the same plane as surface 11, so when the flow profile reaches sensor 12, it is disturbed by the sensor (semiconductor body 20). Nevertheless, it has been found that, if flow channel 19 is configured to provide at the sensor a substantially fully developed flow profile which is substantially independent of a flow profile entering inlet 18A, the perturbation caused by the nominal 0.20 to 0.25 mm thick semiconductor body 20 does not cause inconsistent results, even though this thickness of semiconductor body is a significant portion of a nominal 0.5 mm height of channel 19 illustrated.

Placing sensor 12 an adequate distance from both inlet 18A and outlet 18B as illustrated in Figure 1 provides the option of using the housing for flow in either direction, i.e., by reversing the inlet and outlet, while still preserving the capability to obtain a substantially fully developed flow profile which is substantially independent of the flow profile entering either end of the channel. If such a bidirectional characteristic is not desired, the distance between sensor 12 and outlet 18B can be substantially shortened, thereby making the overall device smaller. In other words, for applications where flow measurements are to be made in one direction only (for flow from inlet 18A to outlet 18B), the distance between sensor 12 and outlet 18B is not of particular importance in obtaining a substantially fully developed profile and in obtaining consistent readings of the sensor.

The embodiment illustrated in Figure 2A utilizes a recess 21 for semiconductor body 20; in the embodiment illustrated, recess 21 results in sensing elements 22 and 24 being substantially in the same plane as first surface 11. While, as explained above, such an arrangement is not necessary to obtain consistent results, there may be advantages in some instances to using such a configuration. For example, maximum sensor response for the sensor disclosed is obtained by orienting the air flow in a direction substantially perpendicular to the edges of the sensing elements 22 and 24. If the orientation of the flow sensor is changed, a varying output will result.

Therefore it may be of advantage to employ means for orienting the flow sensor for a desired or optimum response to the flow. One example of such a means for orienting the flow sensor is recess 21 illustrated in Figure 2A. Another example results from the flip-chip mounting techniques employed in the embodiment illustrated in Figures 3 and 3A whereby pads on the sensor and corresponding pads on first surface 11 may be located to provide a preferred orientation.

The embodiment illustrated in Figures 3 and 3A utilizes a channel 19A of substantially semicircular configuration which may be etched into support piece 10A or otherwise formed as desired. Such a channel having a cross-sectional radius of approximately 0.25 mm and a length of approximately 10 mm between the inlet and the sensor is satisfactory to achieve substantially fully developed flow at the sensor.

In embodiments such as those disclosed, whether the cross-sectional configuration is rectangular as shown in Figure 1, substantially semicircular as shown in Figure 3, or is of some other shape such as square or round is of relatively little concern. What is of significance is providing at the sensor a substantially fully developed flow profile which is substantially independent of the flow profile entering the inlet. In order for this to be accomplished, there must be a sufficiently large aspect ratio (e.g. the ratio of height or width or cross-sectional area to length) for the channel length between inlet 18A and sensor 12.

An enclosed flow channel such as disclosed also provides relatively high flow impedance which limits/regulates the rate of flow through the housing to levels that allow for convenient effective filtering of particulates, due to the inherent limitation of particulates entering the housing. Also, as the cross-sectional area at an upstream filter (not shown) is most likely considerably larger than that of the channel, the velocity at the filter will be considerably lower than the velocity at the sensor. The low velocity at such a filter allows for highly efficient filtration.

An alternative preferred embodiment of the present invention is illustrated in Figures 3 and 3A. Shown are a flow sensor 12 having sensing elements 22 and 24 integral to semiconductor body 20 and support means 10A having a first surface 11A. An enclosed flow channel 19A is formed by making a groove in the upper surface 11A, running below sensing elements 22 and 24, flow channel 19A comprising an inlet and an outlet for providing flow across sensing elements 22 and 24. Support means 10A comprises means for flip-chip mounting semiconductor body 20, and the semiconductor body is flip-chip mounted so that sensing elements 22 and 24 are positioned over groove 19A in the support means. It is preferred that the width of groove 19A be greater than the length of elements 22 and 24. Also illustrated is circuitry 13 for generating the sensor and electrical connections 14 for connecting the sensor and circuitry. Flow channel 19A, sensor 12, circuitry 13, and electrical connections 14 are all integral to support means 10A.

The conventional flip-chip mounting is accomplished as illustrated in Figure 3 with solder bumps 17 (or, as an alternative to solder, bumps 17 may be comprised of a noble metal to reduce corrosion in corrosive environments).

In the embodiments illustrated, circuitry 13 may be connected to flow sensor 12 using conventional thin film (or thick film) metallization interconnects 14 between the circuitry and wire bonds 16 (Figures 2 and 2A) or bumps 17 (Figures 3 and 3A). Metallization interconnects 14 are advantageous to maintaining an enclosed flow channel which is sealed at all locations other than at inlet 18A and outlet 18B, since covers 15 or 15A used in forming the enclosed flow channel can be readily bonded to the surface 11 or 11A over thin film metallization interconnects 14 in order to maintain a seal along the entire interface.

The preferred form of flow sensor is that described in our prior application EP 0 134 859, and is shown in transverse and longitudinal sections on Figures 4 and 5. Briefly, the two sensing resistors 22 and 24 are carried on two respective thin film bridges 32 and 34, which also carry the two halves of a split heater resistor 26. These resistors each consist of a narrow track or line which passes back and forth over the bridge several times. The overall geometry, including that of the leads to the resistors, is symmetrical to insure symmetrical heat conduction properties on members 32 and 34. The leads connect to pad areas for electrically connecting sensor elements 22, 24, 26, and 38 with circuitry 13.

Elements 22 and 24 have a resistance of 1200 Ω and element 26 has a resistance of 520 Ω. Sensors 22 and 24 have a width of approximately 100 μm and a length of approximately 175 μm. The inner edges 76 and 84 of sensors 22 and 24 are one or two line widths (5-10 μm) away from the adjacent edges of heater 26.

The sensor is manufactured as described in the above specification. Briefly, the resistors are formed on the surface of a silicon chip, and suitably protected by silicon nitride layers 28 and 29 on both sides, and a walled depression 30 is then etched beneath them. A resistor 38 is formed on the main body of the chip to sense the chip temperature. (Alternatively, the depression may be open, i.e. continue to the edge of the chip, on either the upstream or the downstream side, as also shown in the above specification.)

The circuitry 13 comprises a drive bridge circuit which maintains the heater resistor 26 temperature substantially constant by means of the drive bridge circuit including resistor 38, and an output bridge circuit which compares the resistances of the two sensing resistors 22 and 24. The circuit 13 is integral to support means 10 or 10A and may be part of the support piece as discrete components, hybrid circuits, thick film components, or other standard approaches to integrating circuitry within a support piece. Support means 10 or 10A may comprise any type of support compatible with circuitry, such as a printed circuit board, a ceramic substrate, or even a semiconductor substrate; support means 10 or 10A comprising a semiconductor substrate could, for example, be a substrate of silicon, and such a substrate could include solid state circuitry comprising all or part of circuitry 13.

Typical operating temperatures of heater elements such as 26 are in the range of approximately 100-200°C with approximately 160°C above ambient being preferred. Using the preferred permalloy element, this can be accomplished with only a few mW of input power.

A heater resistance element having a 200-1000 Ω preferred resistance at 25°C provides the desired power dissipation to achieve the preferred operating temperature at a convenient voltage of a few V and a convenient current of, for example, 2 to 5 mA.

**Claims**

1. A flow sensor assembly comprising a flow sensor (12) having a sensing element (22, 24) and support means (10, 10A) for supporting the slow sensor, characterized in that the support means has formed therein a flow channel (19, 19A) with the sensor mounted adjacent thereto integrally with the support means, the configuration of the flow channel being such as to provide at the sensing element a stabilized flow profile.

2. A flow sensor assembly according to claim 1 characterized in that the flow sensor is a semiconductor body and the flow channel is a groove in the support means over which the flow sensor is flip-chip mounted.

3. A flow sensor assembly according to either previous claim characterized by circuitry (13) for operating the sensor formed integrally with the support means.

4. A flow sensor assembly according to any previous claim characterized in that the support means comprises a printed circuit board, ceramic substrate, or semiconductor substrate.

Fig. 1

Fig. 2

Fig. 2A

Fig. 3

Fig. 3A

Fig. 5

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A. | US - A - 3 931 736 (OLMSTEAD) <br> * Fig.; column 1, lines 49 - column 3, line 8 * | 1-4 | G 01 F 1/68 |
| A | DD - A - 209 907 (WERTHSCHUETZKY) <br> * Abstract * | 1-4 | |
| A | US - A - 3 971 247 (RODDER) <br> * Fig. * | 1,2 | |

TECHNICAL FIELDS SEARCHED (Int. Cl.4)

G 01 F 1/00

The present search report has been drawn up for all claims

| Place of search | Date of completion of the search | Examiner |
|---|---|---|
| VIENNA | 07-11-1985 | BURGHARDT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82